# EUROPÄISCHE PATENTANMELDUNG

(11) **EP 4 096 000 A1**
(43) Veröffentlichungstag der Anmeldung: **30.11.2022**
(21) Anmeldenummer: 22171901.6
(22) Anmeldetag: 05.05.2022
(51) Int. Cl.: H01M 50/231, H01M 50/244, H01M 50/249

(54) **BATTERIEGEHÄUSE**

(30) Priorität: 21.05.2021 DE 102021113287
(71) Anmelder: Friedrich Boysen GmbH & Co. KG, 72213 Altensteig (DE)
(72) Erfinder: ROLLER, Felix, Calw (DE)
(74) Vertreter: Manitz Finsterwald Patent- und Rechtsanwaltspartnerschaft mbB

(57) **Zusammenfassung**

Ein Batteriegehäuse für einen elektrischen Energiespeicher definiert zumindest abschnittsweise einen Aufnahmeraum für den elektrischen Energiespeicher und weist wenigstens zwei Gehäuseabschnitte auf, die unter Ausbildung einer Fügestelle miteinander verbunden sind. Die wenigstens zwei miteinander verbundenen Gehäuseabschnitte sind aus einem zumindest benachbart der Fügestelle organisch beschichteten Blech gefertigt und an der Fügestelle mit einem Verbindungselement verklebt.

## Beschreibung

Die vorliegende Erfindung betrifft ein Batteriegehäuse für einen elektrischen Energiespeicher, insbesondere für eine Fahrzeugbatterie, das zumindest abschnittsweise einen Aufnahmeraum für den elektrischen Energiespeicher definiert und das wenigstens zwei Gehäuseabschnitte aufweist, die unter Ausbildung einer Fügestelle miteinander verbunden sind.

Solche Batteriegehäuse werden beispielsweise in der Kraftfahrzeugtechnik dazu eingesetzt, die Antriebsbatterie oder die Starterbatterie geschützt unterzubringen. Häufig sind Batteriegehäuse der genannten Art aus Aluminium oder aus Stahl gefertigt. Für einen verbesserten Korrosionsschutz kann ein Batteriegehäuse eine Lackierung wie zum Beispiel eine kathodische Tauchlackierung (KTL) aufweisen, was allerdings mit relativ hohen Prozess- und Logistikkosten verbunden ist. Ein weiteres Problem besteht darin, dass die üblicherweise zum Verbinden zweier Gehäuseabschnitte eingesetzten thermischen Fügeverfahren ebenfalls aufwändig sind.

Es ist eine Aufgabe der Erfindung, ein Batteriegehäuse der genannten Art anzugeben, das einfach und kostengünstig herstellbar ist und dennoch eine ausreichend hohe Festigkeit und Dichtigkeit aufweist.

Die Lösung der Aufgabe erfolgt durch ein Batteriegehäuse mit den Merkmalen des Anspruchs 1.

Erfindungsgemäß sind die wenigstens zwei miteinander verbundenen Gehäuseabschnitte jeweils aus einem zumindest benachbart der Fügestelle organisch beschichteten Blech gefertigt und an der Fügestelle mit einem Verbindungselement verklebt. Die organische Beschichtung gewährleistet einen hohen Korrosionsschutz, sodass keine aufwändige Lackierung der Gehäuseabschnitte erforderlich ist. Es ist auch nicht notwendig, das Batteriegehäuse nach dem Verbinden der Gehäuseabschnitte einem Beschichtungsprozess zu unterziehen. Aufgrund der klebenden Verbindung über das Verbindungselement sowie dem dadurch wegfallenden Erfordernis eines thermischen Fügens können die Gehäuseabschnitte vielmehr bereits vor der Durchführung des Verbindungsprozesses organisch beschichtet sein. Im Unterschied zu einem thermischen Fügen verursacht eine Klebeverbindung über ein Verbindungselement keine Beschädigung oder Zerstörung der organischen Beschichtung.

Die wenigstens zwei miteinander verbundenen Gehäuseabschnitte können eine organische Beschichtung aufweisen, die auf einem Polymermaterial, insbesondere auf einem hochpolymeren Stoff, beruht. Die organische Beschichtung kann beispielsweise Polyvinylchlorid, Polyethylen, Polytetrafluorethylen, ein reaktives Harz wie ein Epoxidharz und/oder Gummi umfassen. Solche Beschichtungen gewährleisten einen hohen Schutz gegenüber wässrigen und nicht wässrigen Korrosionsmedien und verhindern das Anhaften fester und pastöser Stoffe an den Gehäuseabschnitten.

Vorzugsweise ist das Verbindungselement zwischen den Gehäuseabschnitten und/oder mit diesen überlappend angeordnet, insbesondere wobei zwischen den miteinander verbundenen Gehäuseabschnitten eine Aussparung gebildet ist, in welche das Verbindungselement eingeklebt ist. Die Gehäuseabschnitte sind also bevorzugt über das Verbindungselement, besonders bevorzugt ausschließlich über das Verbindungselement, miteinander verbunden. Eine überlappende Anordnung ermöglicht relativ große Klebeflächen. Bei der Aussparung kann es sich um einen Spalt oder dergleichen handeln, welcher durch das Verbindungselement ausgefüllt und somit abgedichtet ist.

Es kann vorgesehen sein, dass die Aussparung zwischen jeweiligen, parallel zueinander verlaufenden Kanten der miteinander verbundenen Gehäuseabschnitte gebildet ist und das Verbindungselement eine Längsachse aufweist, die sich parallel zu den Kanten erstreckt. Die Größe des Verbindungselements kann auf diese Weise minimiert werden.

Bevorzugt sind die miteinander verbundenen Gehäuseabschnitte jeweils vollständig aus einem organisch beschichteten Blech gefertigt. Dies erleichtert die Herstellung, weil dann vorgefertigte, im Wesentlichen vollflächig beschichtete Blechteile verwendbar sind. Grundsätzlich können die miteinander verbundenen Gehäuseabschnitte jedoch auch aus einem lediglich abschnittsweise organisch beschichteten Blech gefertigt sein.

Gemäß einer Ausgestaltung der Erfindung bilden die miteinander verbundenen Gehäuseabschnitte eine flächige Wandung. Dies ermöglicht eine besonders einfache Konstruktion.

Insbesondere können sich die wenigstens zwei miteinander verbundenen Gehäuseabschnitte quer zueinander erstrecken und dadurch eine über Eck verlaufende Wandung bilden. Die Fügestelle kann hierbei entlang einer Kante verlaufen, die das Eck der Wandung bildet.

Eine spezielle Ausgestaltung der Erfindung sieht vor, dass die Wandung durch zumindest drei Gehäuseabschnitte gebildet ist, die unter Ausbildung von zumindest zwei Fügestellen miteinander verbunden sind und zumindest benachbart den Fügestellen aus einem organisch beschichteten Blech gefertigt sind, wobei jeweils aneinandergrenzende Gehäuseabschnitte der zumindest drei Gehäuseabschnitte mit einem Verbindungselement verklebt sind. Das Batteriegehäuse kann auf diese Weise aus drei oder mehr flächigen Gehäuseabschnitten zusammengesetzt sein. Dadurch ist ein besonders einfacher Aufbau erzielbar.

Ganz generell gilt, dass die Gehäuseabschnitte verstärkende Strukturen aufweisen können, die einstückig mit diesen ausgebildet sind, wie etwa Sicken und/oder lokale Rippen und/oder Bereiche mit größeren Materialdicken, und/oder die mit diesen verbunden sind, beispielsweise separate Versteifungsbauteile.

Eine weitere Ausführungsform der Erfindung sieht vor, dass die Wandung wannenförmig ist und die miteinander verbundenen Gehäuseabschnitte Seitenwände der wannenförmigen Wandung sind, welche von einem Boden der wannenförmigen Wandung abstehen. Die wannenförmige Wandung kann beispielsweise an einem Trägerbauteil des Batteriegehäuses oder eines Fahrzeugs befestigt werden, nachdem der elektrische Energiespeicher in der Vertiefung der wannenförmigen Wandung angeordnet worden ist.

Das Verbindungselement kann aus einem korrosionsbeständigen Material gefertigt sein. Bevorzugt ist das Verbindungselement abschnittsweise oder vollständig aus einem organisch beschichteten Blech gefertigt.

Es ist bevorzugt, dass die miteinander verbundenen Gehäuseabschnitte jeweils mittels eines kaltaushärtenden Klebstoffs mit dem Verbindungselement verklebt sind. Auf diese Weise ist sichergestellt, dass durch das Kleben keine thermisch bedingten Beschädigungen der organischen Beschichtung verursacht werden.

Die miteinander verbundenen Gehäuseabschnitte können jeweils flüssigkeitsdicht mit dem Verbindungselement verklebt sein, um ein Eindringen von Spritzwasser und dergleichen in den Aufnahmeraum zu vermeiden.

Das Batteriegehäuse kann zur Befestigung an einem Unterboden eines Kraftfahrzeugs ausgebildet sein. Der Unterboden eines Kraftfahrzeugs ist üblicherweise besonders rauen Umgebungsbedingungen ausgesetzt. Daher bestehen für ein am Unterboden angeordnetes Batteriegehäuse besonders hohe Festigkeits- und Dichtigkeits-Anforderungen.

Die miteinander verbundenen Gehäuseabschnitte können jeweils zusätzlich formschlüssig mit dem Verbindungselement verbunden sein. Dies ermöglicht eine besonders stabile Verbindung. Insbesondere können die miteinander verbundenen Gehäuseabschnitte mittels Durchsetzfügen mit dem Verbindungselement verbunden sein.

Die Erfindung betrifft auch ein Verfahren zum Herstellen eines Batteriegehäuses für einen elektrischen Energiespeicher, insbesondere eines wie vorstehend beschrieben gestalteten Batteriegehäuses, wobei wenigstens zwei Gehäuseabschnitte bereitgestellt und unter Ausbildung einer Fügestelle miteinander verbunden werden, um einen Aufnahmeraum für den elektrischen Energiespeicher zu bilden.

Erfindungsgemäß werden Gehäuseabschnitte, die aus einem zumindest benachbart der Fügestelle organisch beschichteten Blech gefertigt sind, an der Fügestelle mit einem Verbindungselement verklebt. Dies ermöglicht einen hohen Korrosionsschutz bei einfacher und kostengünstiger Herstellung. Insbesondere können wenigstens zwei Gehäuseabschnitte bereitgestellt werden, die bereits als Coil oder als Tafel mit einer organischen Beschichtung versehen sind.

Die Gehäuseabschnitte aus dem organisch beschichteten Blech können zusätzlich zum Verkleben mittels Durchsetzfügen mit dem Verbindungselement verbunden werden. Dadurch kann die Festigkeit der Verbindung erhöht werden.

Weiterbildungen der Erfindung sind auch den abhängigen Ansprüchen, der Beschreibung sowie den beigefügten Zeichnungen zu entnehmen.
- Fig. 1: ist eine perspektivische Darstellung eines erfindungsgemäßen Batteriegehäuses.
- Fig. 2: ist eine vergrößerte Teildarstellung eines Eckbereichs des Batteriegehäuses gemäß Fig. 1.

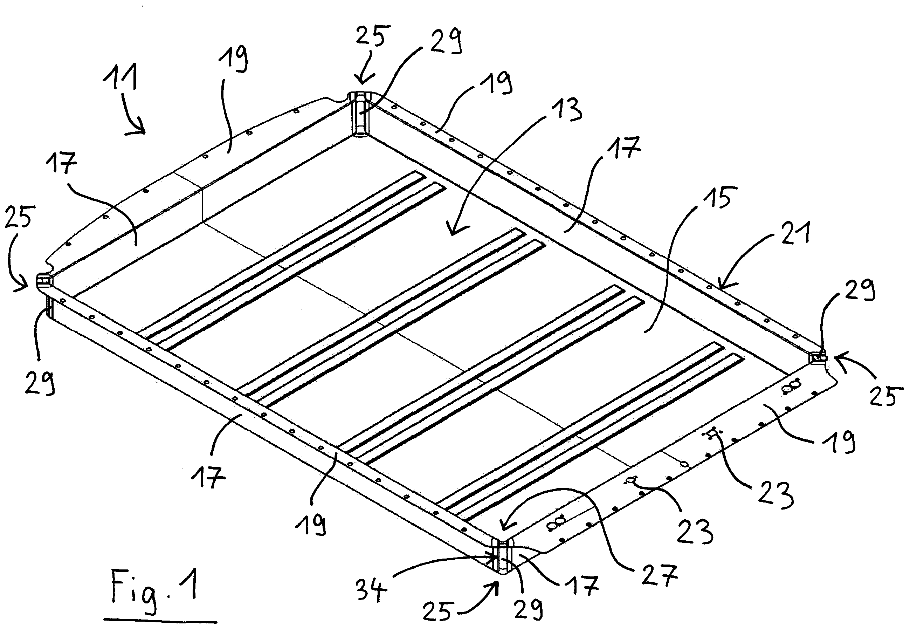

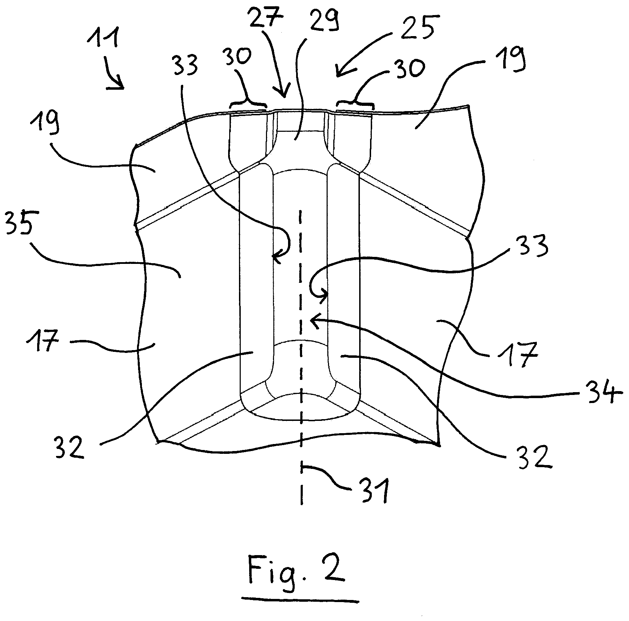

Das in Fig. 1 und 2 dargestellte erfindungsgemäße Batteriegehäuse 11 ist im vorliegenden Ausführungsbeispiel wannenförmig und definiert einen Aufnahmeraum 13 für einen nicht dargestellten elektrischen Energiespeicher, beispielsweise für die Antriebsbatterie eines Elektrofahrzeugs oder Hybridfahrzeugs. Das Batteriegehäuse 11 umfasst mehrere flächige Gehäuseabschnitte, nämlich einen Bodenabschnitt 15, vier von dem Bodenabschnitt 15 abstehende Seitenwandabschnitte 17 sowie vier von den Seitenwandabschnitten 17 abstehende und sich parallel zu dem Bodenabschnitt 15 erstreckende Flanschabschnitte 19. Die sich in einer gemeinsamen Ebene erstreckenden Flanschabschnitte 19 definieren einen Flansch 21 zur Befestigung des Batteriegehäuses 11 an einem nicht dargestellten Träger, wie zum Beispiel dem Unterboden eines Kraftfahrzeugs. Zumindest einer der Flanschabschnitte 19 kann zu diesem Zweck mit Durchführungen 23 für Befestigungsmittel versehen sein.

Wie gezeigt erstrecken sich jeweils aneinandergrenzende Seitenwandabschnitte 17 quer zueinander und bilden somit vier Eckbereiche 25 des Batteriegehäuses 11. Hierbei besteht jeweils zwischen zwei aneinandergrenzenden Seitenwandabschnitten 17 ein Zwischenraum in Form eines Spalts 27, in welchen ein Eckverbinder 29 eingeklebt ist.

Einer der Eckverbinder 29 ist in Fig. 2 vergrößert dargestellt. Im vorliegenden Beispiel ist jeder der Eckverbinder 29 aus einem flächigen Blechteil gebildet. Er kann mit den Endbereichen 32 der benachbarten Seitenwandabschnitte 17 überlappend (bevorzugt, siehe Überlappungsbereich 30) oder auf Stoß angeordnet sein. Jeder der Eckverbinder 29 ist mittels eines kaltaushärtenden Klebstoffs mit den zugehörigen Endbereichen 32 sowie dem Bodenabschnitt 15 verklebt. Wie gezeigt ist, weist jeder der Eckverbinder 29 eine Längsachse 31 auf, die sich parallel zu Kanten 33 der Endbereiche 32 erstreckt. Somit ist in jedem der Eckbereiche 25 eine Fügestelle 34 gebildet. Die miteinander verbundenen und einstückig mit dem Bodenabschnitt 15 ausgeführten Seitenwandabschnitte 17 bilden eine flächige und dichte Wandung 35.

Die Seitenwandabschnitte 17 sind aus einem organisch beschichteten Blech gefertigt. Vorzugsweise sind auch der Bodenabschnitt 15, die Flanschabschnitte 19 und/oder die Eckverbinder 29 aus einem organisch beschichteten Blech gefertigt. Insbesondere kann vorgesehen sein, dass der Bodenabschnitt 15, die Seitenwandabschnitte 17 sowie die Flanschabschnitte 19 durch Umformen aus einem einzelnen organisch beschichteten Blech hervorgegangen sind. Aufgrund der organischen Beschichtung der Seitenwandabschnitte 17, die beispielsweise einen hochpolymeren Stoff umfassen kann, ist keine kathodische Tauchlackierung des Batteriegehäuses 11 erforderlich. Wegen der Verklebung der Seitenwandabschnitte 17 über die Eckverbinder 29 ist kein thermisches Fügeverfahren zum Verbinden der Endbereiche 32 der jeweils aneinandergrenzenden Seitenwandabschnitte 17 erforderlich, sodass eine thermische Beschädigung der organischen Beschichtung vermieden wird.

Zum Herstellen des in Fig. 1 und 2 gezeigten Batteriegehäuses 11 wird ein organisch beschichtetes Blechbauteil in Form einer Rolle oder Tafel bereitgestellt. Vorzugsweise wird ein Blechbauteil bereitgestellt, das eine vollumfänglich abgeschlossene organische Beschichtung aufweist. Das Blechbauteil wird durch einen Umformprozess, insbesondere einen Stanzbiegeprozess, derart bearbeitet, dass der Bodenabschnitt 15, die Seitenwandabschnitte 17 sowie die Flanschabschnitte 19 gebildet werden. Anschließend werden mittels eines kaltaushärtenden Klebeverfahrens die Eckverbinder 29 in die Spalte 27 zwischen den benachbarten Seitenwandabschnitten 17 eingeklebt. Nach dem Aushärten des Klebstoffs ist das Batteriegehäuse 11 einsatzbereit. Bevorzugt werden keinerlei nachträgliche großflächige Lackierungsprozesse durchgeführt. Lokale Bereiche der organischen Beschichtung, die z.B. durch den Stanzbiegeprozesse in Mitleidenschaft gezogen wurden, können einer Oberflächenbehandlung unterzogen werden, um eine möglichst gute Versiegelung des Batteriegehäuses 11 zu erzielen.

Zur Erhöhung der Festigkeit der Verbindung zwischen den Seitenwandabschnitten 17 können die Eckverbinder 29 zusätzlich mittels eines mechanischen Fügeverfahrens, wie zum Beispiel Durchsetzfügen, verbunden werden.

Die organische Beschichtung verleiht dem Batteriegehäuse 11 eine hohe Schutzwirkung gegenüber Korrosion, selbst wenn keine zusätzliche Lackierung vorgesehen ist. Aufgrund der in die Spalte 27 eingeklebten Eckverbinder 29 kann auf thermische Fügeverfahren verzichtet werden, welche die organische Beschichtung schädigen könnten. Die Erfindung ermöglicht somit eine besonders einfache, schnelle und kostengünstige Herstellung eines Batteriegehäuses 11, wobei trotz der vereinfachten Herstellung ein hoher Korrosionsschutz gewährleistet ist.

Zwar wurde die vorliegende Erfindung anhand eines wannenförmigen Bauteils beispielhaft erläutert. Es versteht sich aber, das das erfindungsgemäße Konzept auf beliebig geformte Batteriegehäusebauteile für elektrische Energiespeicher angewendet werden kann, die mit mittels einer Fügeverbindung miteinander verbundene Abschnitte aufweisen.

### Bezugszeichenliste

- 11: Batteriegehäuse
- 13: Aufnahmeraum
- 15: Bodenabschnitt
- 17: Seitenwandabschnitt
- 19: Flanschabschnitt
- 21: Flansch
- 23: Durchführung
- 25: Eckbereich
- 27: Spalt
- 29: Eckverbinder
- 30: Überlappungsbereich
- 31: Längsachse
- 32: Endbereich
- 33: Kante
- 34: Fügestelle
- 35: Wandung

## Patentansprüche

1. Batteriegehäuse (11) für einen elektrischen Energiespeicher, insbesondere für eine Fahrzeugbatterie, das zumindest abschnittsweise einen Aufnahmeraum (13) für den elektrischen Energiespeicher definiert und das wenigstens zwei Gehäuseabschnitte (17) aufweist, die unter Ausbildung einer Fügestelle (34) miteinander verbunden sind,
**dadurch gekennzeichnet,**
**dass** die wenigstens zwei miteinander verbundenen Gehäuseabschnitte (17) jeweils aus einem zumindest benachbart der Fügestelle (34) organisch beschichteten Blech gefertigt sind und an der Fügestelle (34) mit einem Verbindungselement (29) verklebt sind.

2. Batteriegehäuse nach Anspruch 1,
**dadurch gekennzeichnet,**
**dass** das Verbindungselement (29) zwischen den Gehäuseabschnitten (17) und/oder mit diesen überlappend angeordnet ist, insbesondere wobei zwischen den miteinander verbundenen Gehäuseabschnitten (17) eine Aussparung (27) gebildet ist, in welche das Verbindungselement (29) eingeklebt ist.

3. Batteriegehäuse nach Anspruch 2,
**dadurch gekennzeichnet,**
**dass** die Aussparung (27) zwischen jeweiligen, parallel zueinander verlaufenden Kanten (33) der miteinander verbundenen Gehäuseabschnitte (17) gebildet ist und das Verbindungselement (29) eine Längsachse (31) aufweist, die sich parallel zu den Kanten (33) erstreckt.

4. Batteriegehäuse nach einem der vorstehenden Ansprüche,
**dadurch gekennzeichnet,**
**dass** die miteinander verbundenen Gehäuseabschnitte (17) jeweils vollständig aus einem organisch beschichteten Blech gefertigt sind.

5. Batteriegehäuse nach einem der vorstehenden Ansprüche,
**dadurch gekennzeichnet,**
**dass** die miteinander verbundenen Gehäuseabschnitte (17) eine flächige Wandung (35) bilden.

6. Batteriegehäuse nach Anspruch 5,
**dadurch gekennzeichnet,**
**dass** sich die wenigstens zwei miteinander verbundenen Gehäuseabschnitte (17) quer zueinander erstrecken und dadurch eine über Eck verlaufende Wandung (35) bilden.

7. Batteriegehäuse nach Anspruch 5 oder 6,
**dadurch gekennzeichnet,**
**dass** die Wandung (35) durch zumindest drei Gehäuseabschnitte (17) gebildet ist, die unter Ausbildung von zumindest zwei Fügestellen (34) miteinander verbunden sind und zumindest benachbart den Fügestellen (34) aus einem organisch beschichteten Blech gefertigt sind, wobei jeweils aneinandergrenzende Gehäuseabschnitte der zumindest drei Gehäuseabschnitte (17) mit einem Verbindungselement (29) verklebt sind.

8. Batteriegehäuse nach einem der Ansprüche 5 bis 7,
**dadurch gekennzeichnet,**
**dass** die Wandung (35) wannenförmig ist und die miteinander verbundenen Gehäuseabschnitte (17) Seitenwände der wannenförmigen Wandung (35) sind, welche von einem Boden (15) der wannenförmigen Wandung (35) abstehen.

9. Batteriegehäuse nach einem der vorstehenden Ansprüche,
**dadurch gekennzeichnet,**
**dass** das Verbindungselement (29) aus einem organisch beschichteten Blech gefertigt ist.

10. Batteriegehäuse nach einem der vorstehenden Ansprüche,
**dadurch gekennzeichnet,**
**dass** die miteinander verbundenen Gehäuseabschnitte (17) jeweils mittels eines kaltaushärtenden Klebstoffs mit dem Verbindungselement (29) verklebt sind.

11. Batteriegehäuse nach einem der vorstehenden Ansprüche,
**dadurch gekennzeichnet,**
**dass** die miteinander verbundenen Gehäuseabschnitte (17) jeweils flüssigkeitsdicht mit dem Verbindungselement (29) verklebt sind.

12. Batteriegehäuse nach einem der vorstehenden Ansprüche,
**dadurch gekennzeichnet,**
**dass** das Batteriegehäuse (11) zur Befestigung an einem Unterboden eines Kraftfahrzeugs ausgebildet ist.

13. Batteriegehäuse nach einem der vorstehenden Ansprüche,
**dadurch gekennzeichnet,**
**dass** die miteinander verbundenen Gehäuseabschnitte (17) jeweils zusätzlich formschlüssig mit dem Verbindungselement (29) verbunden sind.

14. Verfahren zum Herstellen eines Batteriegehäuses (11) für einen elektrischen Energiespeicher, insbesondere eines Batteriegehäuses nach einem der vorstehenden Ansprüche, wobei wenigstens zwei Gehäuseabschnitte (17) bereitgestellt und unter Ausbildung einer Fügestelle (34) miteinander verbunden werden, um einen Aufnahmeraum (13) für den elektrischen Energiespeicher zu bilden,
**dadurch gekennzeichnet,**
**dass** Gehäuseabschnitte (17), die aus einem zumindest benachbart der Fügestelle (34) organisch beschichteten Blech gefertigt sind, an der Fügestelle (34) mit einem Verbindungselement (29) verklebt werden.

15. Verfahren nach Anspruch 14,
**dadurch gekennzeichnet,**
**dass** die Gehäuseabschnitte (17) aus dem organisch beschichteten Blech zusätzlich zum Verkleben mittels Durchsetzfügen mit dem Verbindungselement (29) verbunden werden.
